# EUROPÄISCHE PATENTSCHRIFT

(11) **EP 1 551 264 B1**
(45) Veröffentlichungstag und Bekanntmachung des Hinweises auf die Patenterteilung: **19.07.2006**
(21) Anmeldenummer: 03769306.6
(22) Anmeldetag: 23.09.2003
(51) Int. Cl.: A47J 42/56, A47J 43/044

(54) **SICHERHEITSSCHALTER FÜR KÜCHENGERÄTE**
SAFETY SWITCH FOR KITCHEN UTENSILS
COMMUTATEUR DE SECURITE POUR APPAREILS DE CUISINE

(30) Priorität: 25.09.2002 DE 10244598
(43) Veröffentlichungstag der Anmeldung: 13.07.2005
(73) Patentinhaber: BSH Bosch und Siemens Hausgeräte GmbH, 81739 München (DE)
(72) Erfinder: BREZOVNIK, Peter, 3330 Mozirje (SI); PAVLOVIC, Henrik, Ljubno ob Savin 3333 (SI); ZIBRET, Igor, 3327 Smartno ob Paki (SI)
(86) Internationale Anmeldenummer: PCT/EP2003/010585
(87) Internationale Veröffentlichungsnummer: WO 2004/030502

(56) Entgegenhaltungen:
- FR-A- 2 415 996
- FR-A- 2 756 477
- FR-A- 2 822 364
- US-A1- 2002 012 288

## Beschreibung

Die vorliegende Erfindung betrifft eine Vorrichtung zum Schalten eines Küchengeräts mit einer Schalteinrichtung zum elektrischen An- und Abschalten des Küchengeräts und einer Betätigungseinrichtung, mit der die Schalteinrichtung betätigbar ist. Darüber hinaus betrifft die vorliegende Erfindung ein Verfahren zum Schalten eines Küchengeräts durch Verbinden von zwei Gehäusekomponenten des Küchengeräts und Betätigen einer Betätigungseinrichtung zum Schalten einer mit dieser mechanisch gekoppelten Schalteinrichtung des Küchengeräts.

Die Betätigung eines Küchengeräts kann erfordern, dass dessen Gehäuse erst vollständig geschlossen wird, bevor es in Betrieb genommen wird. Dies ist insbesondere dann notwendig, wenn durch den Betrieb des Küchengeräts Verletzungsgefahr oder Beschädigungsrisiken bestehen. Beispielsweise bei Küchengeräten mit rasch rotierenden Werkzeugen ist dies der Fall.

Zu derartigen Küchengeräten zählen auch sogenannte Chopper (Zerhacker), mit denen gröbere Bestandteile von Lebensmitteln zerkleinert und gegebenenfalls zu Mus verarbeitet werden können. Die Chopper können aber auch zum Mischen von flüssigen beziehungsweise breiartigen Lebensmitteln sowie zum Schlagen von Sahne und dergleichen verwendet werden.

Der Aufbau eines Choppers besteht typischerweise aus einem schüsselartigen Behältnis und einer mit hoher Drehzahl rotierenden Funktionseinheit (Arbeitswerkzeug), die in der Regel am Boden des Behältnisses angeordnet ist. Der Antrieb dieser Funktionseinheit beziehungsweise dieses Werkzeugs kann unterhalb oder oberhalb des Behältnisses vorgesehen sein. Das Behältnis wird meist mit einem Deckel verschlossen, um ein Herausspritzen aus dem Behältnis zu vermeiden.

Eine gattungsgemäße Vorrichtung zum Schalten eines Küchengeräts ist aus der deutschen Offenlegungsschrift DE 39 04 983 A1 bekannt. Dort ist ein Küchengerät beschrieben, bei dem an einem Gerätegehäuse ein Gehäuseteil, der ein motorisch angetriebenes Werkzeug abdeckt, über einen manuell betätigbaren Haltebügel gehalten wird. Eine Zusatzsteuereinrichtung dient dazu, dass ein am Haltebügel vorgesehenes Steuerelement ein Schließen des Motorstromkreises nur dann zulässt, wenn der Haltebügel in seiner Arbeitsstellung steht. Um hierbei Fehlschaltungen zu verhindern, weist die Zusatzsteuereinrichtung ein Sicherheitselement auf, das bei gelöstem Gehäuseteil gegen das Steuerelement durch einen Schieber abgeschirmt ist. Zum Anschalten des Küchengeräts ist damit neben dem Sicherheitselement ein zusätzlicher Schalter notwendig.

Darüber hinaus ist aus der deutschen Auslegeschrift DE 29 04 159 B1 ein Elektromesser oder Handrührer bekannt, das/der mittels eines Schaltglieds ein- und ausschaltbar ist. In antreibbare Werkzeugaufnahmen sind Arbeitswerkzeuge rastend einsetzbar und mittels eines im Gehäuse verstellbaren Auslöseglieds wieder auslösbar. Das Schaltglied und das Auslöseglied sind so gegeneinander gesichert, dass entweder nur die Verstellung des Schaltsglieds oder nur die Verstellung des Auslöseglieds freigegeben ist.

Die Aufgabe der vorliegenden Erfindung besteht darin, eine alternative Vorrichtung bereitzustellen, mit der verhindert werden kann, dass ein Küchengerät eingeschaltet wird, wenn es nicht ordnungsgemäß zusammengesetzt ist.

Diese Aufgabe wird erfindungsgemäß gelöst durch eine Vorrichtung zum Schalten eines Küchengeräts mit einer Schalteinrichtung zum elektrischen An- und Abschalten des Küchengeräts und einer Betätigungseinrichtung, mit der die Schalteinrichtung betätigbar ist, wobei die Schalteinrichtung zwischen einer ersten Stellung und einer zweiten Stellung relative zu der Betätigungseinrichtung bewegbar ist, und wobei die Schalteinrichtung von der Betätigungseinrichtung in der ersten Stellung nicht schaltbar, jedoch in der zweiten Stellung schaltbar ist.

Femer ist erfindungsgemäß vorgesehen ein Verfahren zum Schalten eines Küchengeräts durch Verbinden von zwei Gehäusekomponenten des Küchengeräts und Betätigen einer Betätigungseinrichtung zum Schalten einer mit dieser mechanisch gekoppelten Schalteinrichtung des Küchengeräts, wobei beim Verbinden der zwei Gehäusekomponenten die Schalteinrichtung auf die Betätigungseinrichtung zubewegt wird.

Erfindungsgemäß sind somit zwei Bewegungen erforderlich, um das Küchengerät anzuschalten. Zum einen müssen die Schalteinrichtung und die Betätigungseinrichtung aufeinander zubewegt werden, was beispielsweise durch das korrekte Aufsetzen des Deckels auf einen Behälter des Küchengeräts erfolgen kann, und zum anderen muss die Betätigungseinrichtung für den Schaltvorgang betätigt werden. Damit kann die entsprechende Sicherheit im Umgang mit dem Küchengerät gewährleistet werden.

Bei einer vorteilhaften Ausgestaltung umfasst die Betätigungseinrichtung eine Tasteinrichtung beziehungsweise einen Taster. Damit ist es möglich, das Küchengerät durch einen Taster anzuschalten, was insbesondere bei Zerkleinerungsgeräten beziehungsweise Choppem günstig ist.

Die Betätigungseinrichtung kann Teil eines Deckels des Küchengeräts sein. Damit ist es beispielsweise möglich, dass das Küchengerät durch Herabdrücken des Deckeloberteils in Betrieb genommen wird.

Vorzugsweise ist die Schalteinrichtung an einen ersten Gehäuseabschnitt montierbar und nimmt die zweite Stellung ein, wenn der erste Gehäuseabschnitt in definierter Weise an einen zweiten Gehäuseabschnitt des Küchengeräts montiert ist. Falls nun der erste Gehäuseabschnitt Teil des Deckels und der zweite Gehäuseabschnitt Teil eines Behälters ist, muss der Deckel erst ordnungsgemäß auf den Behälter aufgesetzt werden, bevor das Küchengerät eingeschaltet werden kann.

Die Schaltvorrichtung und gegebenenfalls die Antriebseinrichtung sowie entsprechende Werkzeugaufnahmen können vollständig in den Deckel des Küchengeräts integriert sein. Somit ist es möglich, dass das Küchengerät nur dann eingeschaltet werden kann, wenn der Deckel auf den Behälter des Küchengeräts korrekt aufgesetzt ist.

Die vorliegende Erfindung wird nun anhand der beigefügten Zeichnungen näher erfäutert, in denen zeigen:
- Figur 1: eine Querschnittsansicht eines erfindungsgemäßen Choppers; und
- Figur 2A bis 2D: Ansichten eines erfindungsgemäßen Sicherheitsschalters in verschiedenen Zuständen.

Die nachfolgend aufgeführten Ausführungsbeispiele stellen bevorzugte Ausführungsformen der vorliegenden Erfindung dar.

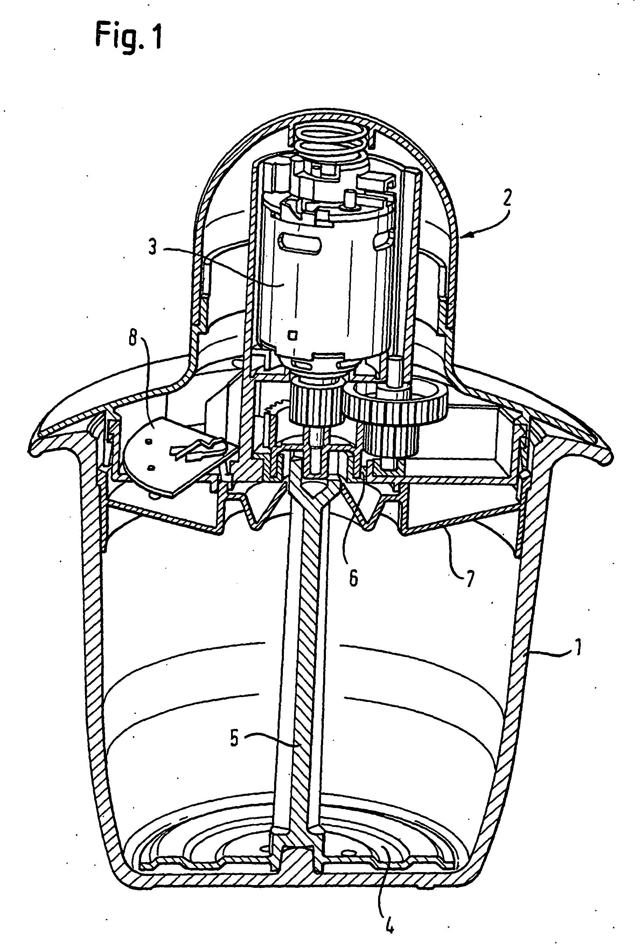

Figur 1 zeigt einen Querschnitt durch einen Chopper. Der Chopper umfasst eine Schüssel 1 und einen Deckel 2. Der Deckel 2 dient nicht nur zum Abdichten der Schüssel 1 sondern beinhaltet gleichzeitig einen elektrischen Kleinmotor 3 einschließlich Getriebe zum Antrieb einer Schlagscheibe 4, die am Boden der Schüssel 1 drehbar gelagert ist. Eine Welle 5 überträgt das Drehmoment vom Getriebe des Elektromotors 3 zu der Schlagscheibe 4. Die Schlagscheibe 4 dient beispielsweise zum Schlagen von Eiklar oder Sahne.

Die Lagerung der Welle 5 in dem Deckel 2 unterhalb des Getriebes des Elektromotors 3 erfolgt durch ein Axial/Radial-Gleitlager 6.

An der Unterseite des Deckels zum Inneren der Schüssel zugewandt befindet sich ein Deckabschnitt 7. Dieser Deckabschnitt dient zum Abdecken beziehungsweise Abdichten des in der Schüssel 1 befindlichen fließenden Mediums, wie Flüssigkeiten, Brei, Eiswürfel, etc. Der Deckabschnitt 7 ist zur Durchführung der Welle 5 im Zentrum durchbrochen.

Der Deckel 2 weist femer einen integrierten Schalter 8 auf, der mit einer Sicherheitsfunktion ausgestattet ist. Erst wenn der Deckel 2 auf die Schüssel 1 ordnungsgemäß aufgebracht ist, erlaubt dieser Sicherheitsschalter 8 den Betrieb des Choppers.

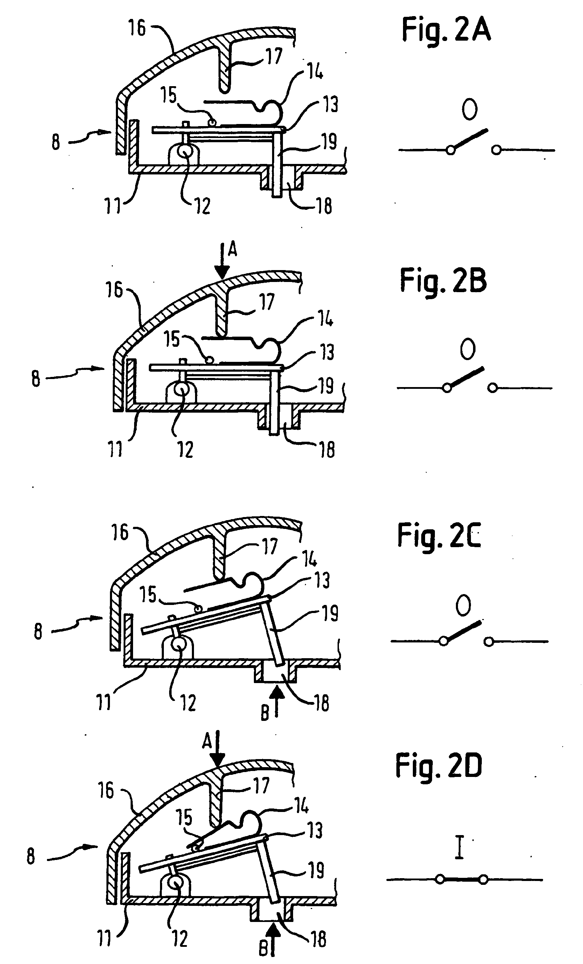

Figuren 2A bis 2D zeigen unterschiedliche Stellungen des Sicherheitsschalters gemäß der vorliegenden Erfindung. Ein Gehäuseabschnitt 11 ist im Schnitt dargestellt. Auf diesen ist ein Drehlager 12 montiert, in welchem eine Platine 13 drehbar gelagert ist. Auf der Platine 13 befindet sich ein Metallfederkontakt 14, der gegen einen Gegenkontakt 15 gedrückt werden kann. Falls die beiden Kontakte gegeneinander gedrückt sind, ist auf der Platine 13 ein entsprechender Kurzschluss hergestellt.

Über dem Metallfederkontakt 14 befindet sich ein Betätigungs- oder Tastelement 16. Dieses weist einen stabförmigen Vorsprung 17 auf, der in Bewegungsrichtung des Betätigungselements 16 zu dem Metallfederkontakt 14 ragt.

In dem in Figur 2A dargestellten Zustand drückt der Vorsprung 17 nicht auf den Metallfederkontakt 14 und die Metallkontaktfeder 14 ist entspannt und drückt nicht ihrerseits gegen den Gegenkontakt 15. Dies bedeutet, dass der Schalter offen ist (Zustand "0") und das Küchengerät abgeschaltet ist.

In Figur 2B ist ein Zustand dargestellt, bei dem das Betätigungselement 16 nach unten in Richtung auf den Metallfederkontakt 14 gedrückt ist. Der Vorsprung 17 kann sich in diesem Zustand noch vor dem Metallfederkontakt 14 befinden, er kann den Metallfederkontakt 14 bereits berühren oder ihn in Richtung zu dem Gegenkontakt 15 etwas nach unten drücken. Jedenfalls berührt der Metallfederkontakt 14 den Gegenkontakt 15 noch nicht, so dass der Schalter nach wie vor offen ist (Zustand "0"). Die Bewegung des Betätigungselements 16 allein, die mit dem Pfeil A in der Figur angedeutet ist, genügt somit noch nicht, um das Küchengerät anzuschalten.

In Figur 2C ist der Zustand wiedergegeben, in dem der Gehäuseabschnitt 11 ordnungsgemäß auf einen anderen, nicht dargestellten Gehäuseabschnitt aufgesetzt ist. Um diesen Zustand an die Schalteinrichtung weiterzugeben, besitzt der Gehäuseabschnitt 11 eine Bohrung 18 und die Platine 13 zur Halterung und Drehung in dem Lager 12 eine L-förmige Halteeinrichtung, die an der einen Seite mit der Lagerwelle des Lagers 12 verbunden ist und am anderen Ende zur Bohrung 18 weist beziehungsweise durch diese hindurchdringt (vergleiche Figuren 2A und 2B). Im waagrechten Zustand, d. h. wenn der Gehäuseabschnitt 11 nicht auf einen anderen Gehäuseabschnitt aufgebracht ist, ragt die Halteeinrichtung 19 mit ihrem einen Ende durch die Bohrung 18 (Figuren 2A und 2B).

Im Fall, dass der Gehäuseabschnitt 11 korrekt auf einen anderen Gehäuseabschnitt aufgesetzt ist, drückt ein nicht in Figur 2C dargestelltes Element das eine Ende der Halteeinrichtung 19 nach oben, so dass die gesamte Halteeinrichtung 19 und ebenfalls die Platine 13 mit dem Metallfederkontakt 14 und dem Gegenkontakt 15 im Lager 12 nach oben gedreht werden. Damit wird auch in diesem Fall der Metallfederkontakt 14 an den Vorsprung 17 des Betätigungselements 16 angenähert, aber nur soweit, dass kein Kontakt zum Gegenkontakt 15 hergestellt wird. Dies bedeutet, dass der Sicherheitsschalter nach wie vor offen bleibt (Zustand "0"). Folglich wird das Küchengerät durch Aufsetzen des Gehäuseabschnitts auf einen anderen Gehäuseabschnitt, z. B. des Deckels auf einen Behälter, was durch den Pfeil B in Figur 2 angedeutet ist, noch nicht angeschaltet.

In Figur 2D ist schließlich der Zustand wiedergegeben, bei dem der Gehäuseabschnitt 11 auf einen anderen nicht dargestellten Gehäuseabschnitt korrekt aufgesetzt ist (Pfeil B) und das Betätigungselement 16 betätigt, d. h. nach unten gedrückt, wird (Pfeil A). In diesem Zustand ist die Platine 13 einschließlich dem Metallfederkontakt 14 und dem Gegenkontakt 15 wie in Figur 2 nach oben gekippt. Dadurch, dass die Schaltungseinrichtung 14, 15 somit auf das Betätigungselement 16 zubewegt ist, ist der Bewegungsumfang des Betätigungselements 16 ausreichend, um mittels des Vorsprungs 17 den Metallfederkontakt 14 soweit nach unten zu drücken, dass er den Gegenkontakt 15 erreicht. Damit ist der Schalter geschlossen (Zustand "I") und das Küchengerät ist angeschaltet.

Alternativ kann die Platine 13 auch rein translatorisch in Richtung auf den Vorsprung 17 angehoben werden, wenn der Gehäuseabschnitt 11 auf den anderen Gehäuseabschnitt aufgesetzt wird. Ebenso könnte die Platine 13 beispielsweise unter den Vorsprung 17 gedreht werden, wenn der Gehäuseabschnitt 11 auf den anderen Gehäuseabschnitt durch eine Drehbewegung aufgebracht beziehungsweise eingerastet wird.

## Patentansprüche

1. Vorrichtung zum Schalten eines Küchengeräts mit
einer Schalteinrichtung zum elektrischen An- und Abschalten des Küchengeräts, die einen elektrischen Kontakt (14) und einen Gegenkontakt (15) aufweist, und
einer Betätigungseinrichtung (16, 17), mit der die Schalteinrichtung (14, 15) betätigbar ist,
**dadurch gekennzeichnet, dass**
die Schalteinrichtung zwischen einer ersten Stellung, in der die Schalteinrichtung von der Betätigungseinrichtung (16, 17) nicht schaltbar ist, und einer zweiten Stellung, in der die Schalteinrichtung von der Betätigungseinrichtung (16, 17) schaltbar ist, relative zu der Betätigungseinrichtung (16, 17) bewegbar ist.

2. Vorrichtung nach Anspruch 1, wobei die Betätigungseinrichtung (16, 17) eine Tasteinrichtung umfasst.

3. Vorrichtung nach Anspruch 1 oder 2, wobei die Betätigungseinrichtung (16, 17) Teil eines Deckels (2) des Küchengeräts ist.

4. Vorrichtung nach einem der Ansprüche 1 bis 3, wobei die Schalteinrichtung (14, 15) einen Federmetallkontakt (14) aufweist, der durch die Betätigungseinrichtung (16, 17) in der zweiten Stellung gegen einen Gegenkontakt (15) drückbar ist.

5. Vorrichtung nach Anspruch 4, wobei der Federmetallkontakt (14) auf einer Platine (13) angeordnet ist.

6. Vorrichtung nach einem der Ansprüche 1 bis 5, wobei die Schalteinrichtung (14, 15) an einen ersten Gehäuseabschnitt (11) montierbar ist und die zweite Stellung einnimmt, wenn der erste Gehäuseabschnitt (11) in definierter Weise an einen zweiten Gehäuseabschnitt des Küchengeräts montiert ist.

7. Vorrichtung nach Anspruch 6, wobei die Schalteinrichtung (14, 15) an dem ersten Gehäuseabschnitt (11) drehbar gelagert ist.

8. Vorrichtung nach Anspruch 6 oder 7, wobei die Schalteinrichtung (14, 15) einen von dem zweiten Gehäuseabschnitt betätigbaren Stift (19) umfasst, mittels dem sie auf die Betätigungseinrichtung (16, 17) zubewegbar ist.

9. Küchengerät mit einer Vorrichtung zum Schalten nach einem der Ansprüche 1 bis 8.

10. Küchengerät nach Anspruch 9, wobei die Vorrichtung zum Schalten in einen Deckel (2) integriert ist.

11. Küchengerät nach Anspruch 10, wobei der erste Gehäuseabschnitt Teil des Deckels (2) und der zweite Gehäuseabschnitt Teil eines Behälters (1) ist.

12. Verfahren zum Schalten eines Küchengeräts durch
Verbinden von zwei Gehäusekomponenten des Küchengeräts und
Betätigen einer Betätigungseinrichtung (16, 17) zum Schalten einer mit dieser mechanisch gekoppelten Schalteinrichtung (14, 15) des Küchengeräts,
**dadurch gekennzeichnet, dass**
beim Verbinden der zwei Gehäusekomponenten die Schalteinrichtung (14, 15) auf die Betätigungseinrichtung (16, 17) zubewegt wird.

13. Verfahren nach Anspruch 12, wobei die Schalteinrichtung (14, 15) durch eine Drehbewegung auf die Betätigungseinrichtung (16, 17) zubewegt wird.

## Claims

1. Device for switching a kitchen appliance, comprising a switching device for electrical switching on and switching off the kitchen appliance, which has an electric contact (14) and a counter-contact (15), and an actuating device (16, 17) by which the switching device (14, 15) is actuable, **characterised in that** the switching device is movable relative to the actuating device (16, 17) between a first setting in which the switching device is not switchable by the actuating device (16, 17) and a second setting in which the switching device is switchable by the actuating device (16, 17).

2. Device according to claim 1, wherein the actuating device (16, 17) comprises a button device.

3. Device according to claim 1 or 2, wherein the actuating device (16, 17) is part of a cover (2) of the kitchen appliance.

4. Device according to one of claims 1 to 3, wherein the switching device (14, 15) comprises a spring metal contact (14) which can be pressed by the actuating device (16, 17) into the second setting against a counter-contact (15).

5. Device according to claim 4, wherein the spring metal contact (14) is arranged on a plate (13).

6. Device according to one of claims 1 to 5, wherein the switching device (14, 15) can be mounted at a first housing section (11) and adopts the second setting when the first housing section (11) is mounted in defined manner at a second housing section of the kitchen appliance.

7. Device according to claim 6, wherein the switching device (14, 15) is rotatably mounted at the first housing section (11).

8. Device according to claim 6 or 7, wherein the switching device (14, 15) comprises a pin (19) which is actuable by the second housing section and by means of which the device is movable onto the actuating device (16, 17).

9. Kitchen appliance with a device for switching according to one of claims 1 to 8.

10. Kitchen appliance according to claim 9, wherein the device for switching is integrated in a cover (2).

11. Kitchen appliance according to claim 10, wherein the first housing section is part of the cover (2) and the second housing section is part of a container (1).

12. Method of switching a kitchen appliance by connection of two housing components of the kitchen appliance and actuation of an actuating device (16, 17) for switching a switching device (14, 15), which is mechanically coupled with the actuating device, of the kitchen appliance, **characterised in that** on connection of the two housing components the switching device (14, 15) is moved onto the actuating device (16, 17).

13. Method according to claim 12, wherein the switching device (14, 15) is moved by a rotational movement onto the actuating device (16, 17).

## Revendications

1. Dispositif pour commuter un appareil de cuisine, comprenant
un dispositif de commutation pour connecter et déconnecter électriquement l'appareil de cuisine, lequel dispositif comporte un contact électrique (14) et un contact opposé (15) et
un dispositif d'actionnement (16, 17) permettant d'actionner le dispositif de commutation (14, 15),
**caractérisé en ce que**
le dispositif de commutation peut être déplacé relativement au dispositif d'actionnement (16, 17) entre une première position dans laquelle le dispositif de commutation ne peut pas être commuté par le dispositif d'actionnement (16, 17) et une deuxième position dans laquelle le dispositif de commutation peut être commuté par le dispositif d'actionnement (16, 17).

2. Dispositif selon la revendication 1, dans lequel le dispositif d'actionnement (16, 17) comprend un dispositif de touche.

3. Dispositif selon l'une des revendications 1 ou 2, dans lequel le dispositif d'actionnement (16, 17) est une partie d'un couvercle (2) de l'appareil de cuisine.

4. Dispositif selon l'une des revendications 1 à 3, dans lequel le dispositif de commutation (14, 15) comporte un contact à ressort métallique (14) qui, dans la deuxième position, peut être poussé contre un contact opposé (15) par le dispositif d'actionnement (16, 17).

5. Dispositif selon la revendication 4, dans lequel le contact à ressort métallique (14) est disposé sur une plaque (13).

6. Dispositif selon l'une des revendications 1 à 5, dans lequel le dispositif de commutation (14, 15) peut être monté sur une première partie de boîtier (11) et se met dans la deuxième position lorsque la première partie de boîtier (11) est montée de manière définie sur une deuxième partie de boîtier de l'appareil de cuisine.

7. Dispositif selon la revendication 6, dans lequel le dispositif de commutation (14, 15) est logé de manière rotative sur la première partie de boîtier (11).

8. Dispositif selon la revendication 6 ou 7, dans lequel le dispositif de commutation (14, 15) comprend une tige (19) actionnable par la deuxième partie de boîtier, au moyen de laquelle il peut être déplacé vers le dispositif d'actionnement (16, 17).

9. Appareil de cuisine comportant un dispositif de commutation selon l'une des revendications 1 à 8.

10. Appareil de cuisine selon la revendication 9, dans lequel le dispositif de commutation est intégré dans un couvercle (2).

11. Appareil de cuisine selon la revendication 10, dans lequel la première partie de boîtier est une partie du couvercle (2) et la deuxième partie de boîtier est une partie d'un récipient (1).

12. Procédé pour commuter un appareil de cuisine par assemblage de deux composants de boîtier de l'appareil de cuisine et actionnement d'un dispositif d'actionnement (16, 17) pour commuter un dispositif de commutation (14,15) de l'appareil de cuisine couplé mécaniquement audit dispositif d'actionnement, **caractérisé en ce que**, lors de l'assemblage des deux composants de boîtier, le dispositif de commutation (14, 15) subit un déplacement vers le dispositif d'actionnement (16, 17).

13. Procédé selon la revendication 12, dans lequel le dispositif de commutation (14, 15) subit un déplacement vers le dispositif d'actionnement (16, 17) par un mouvement de rotation.
